# FASCICULE DE BREVET EUROPEEN

(11) **EP 2 904 690 B1**
(45) Date de publication et mention de la délivrance du brevet: **13.01.2021**
(21) Numéro de dépôt: 13782790.3
(22) Date de dépôt: 03.10.2013
(51) Int. Cl.: H02J 7/14, B60R 16/04, F02N 11/14

(54) **RÉSEAU ÉLECTRIQUE POUR VÉHICULE AUTOMOBILE**
STROMNETZ FÜR KRAFTFAHRZEUG
ELECTRICAL NETWORK FOR AUTOMOTIVE VEHICLE

(30) Priorité: 03.10.2012 FR 1259378
(43) Date de publication de la demande: 12.08.2015
(73) Titulaire: Valeo Systèmes de Contrôle Moteur, 95892 Cergy-Pontoise (FR)
(72) Inventeur: DECOSTER, Sylvain, 78330 Fontenay Le Fleury (FR); CORNIGLION, Cyrille, 95120 Ermont (FR); RICHERT, Antoine, 75011 Paris (FR); BENCHETRITE, Daniel, 94000 Creteil (FR); BAUDESSON, Philippe, 27220 La Boissiere (FR); BANASSE, Mehdi, 94700 Maisons-alfort (FR)
(86) Numéro de dépôt international: PCT/FR2013/052354
(87) Numéro de publication internationale: WO 2014/053780

(56) Documents cités:
- EP-A1- 2 314 861
- WO-A1-2004/042888
- DE-A1-102008 012 640
- DE-A1-102009 029 524
- DE-A1-102010 014 104

## Description

L'invention a pour objet un réseau électrique pour véhicule automobile, comportant au moins un composant de forte puissance s'activant de manière transitoire. Plus particulièrement, l'invention concerne un réseau électrique comportant en outre un générateur électrique, un stockeur d'énergie qui stocke l'énergie électrique générée par ledit générateur et un dispositif consommateur d'énergie du véhicule, nommé « consommateur électrique» dans la suite du présent document assurant par exemple des fonctions de ventilation, d'éclairage. Des exemples de réseaux électriques pour véhicule automobile peuvent être trouvés dans les documents brevets DE102008012640 et US2005267697.

Dans le cadre de la présente demande, on entend par composant de forte puissance un consommateur électrique nécessitant une puissance électrique supérieure à celle du dispositif consommateur d'énergie. En particulier, le composant de forte puissance peut nécessiter une grande quantité d'énergie électrique de manière transitoire, par exemple lors de son activation. Par exemple, le consommateur de forte puissance peut comprendre tout composant de puissance à consommation de courant élevée, de l'ordre de 400-500 A, pendant une durée limitée, entre 0 et 10s, (pendant la période d'activation transitoire du composant).

On entend par stockeur de puissance dans le cadre de la présente demande, tout stockeur d'énergie ayant une densité de puissance élevée. Par exemple, un stockeur de puissance est un stockeur d'énergie dont le rapport P/E (Puissance/Energie) est supérieur à une valeur prédéfinie, par exemple P/E>20.

Lors de l'activation du composant de forte puissance, un fort appel de courant se produit de manière transitoire sur le réseau électrique du véhicule. L'intensité du courant appelé dépend du temps de réponse voulu pour ce composant de forte puissance pour son activation. A titre d'exemple, lors de l'activation d'un compresseur de suralimentation électrique, la vitesse de rotation de la turbine dudit compresseur doit passer de 4000 RPM à 70000 RPM en 350 ms. La puissance nécessaire lors de l'activation peut être comprise entre 1 et 7 kW. Ainsi, un tel composant nécessite une puissance électrique importante au moment de son activation. Or la dégradation des performances du composant, pour éviter les forts appels de courant, n'est pas souhaitable. L'énergie nécessaire lors de la phase de démarrage d'un tel composant de puissance est fournie par le stockeur d'énergie et non pas par le générateur car le temps de réponse du générateur est généralement supérieur à celui du composant de forte puissance. Cependant, le stockeur d'énergie d'un réseau électrique de véhicule est limité en tension. Pour une batterie de véhicule, la tension batterie est préférentiellement autour de 12 V. Une telle tension n'est pas suffisante pour assurer de façon optimale à la fois l'activation du composant de forte puissance et l'alimentation des autres consommateurs d'énergie.

En effet, l'activation d'un composant de forte puissance provoque une chute de tension sur le réseau électrique qui peut entrainer des coupures ou des dysfonctionnements des autres dispositifs consommateurs du véhicule. Ces dispositifs consommateurs, qui fonctionnent pour une tension supérieure à un seuil de tension minimal, peuvent être des composants sécuritaires ou de confort du véhicule, par exemple les phares du véhicule. Leur fonctionnement doit être assuré à n'importe quel instant pour la sécurité des passagers du véhicule.

En outre, le composant de forte puissance étant alimenté par le stockeur d'énergie du réseau du véhicule, la durée de vie du stockeur d'énergie est réduite du fait des forts appels de courants qu'il va subir lors de l'activation du composant de forte puissance. Il serait donc nécessaire d'installer sur le réseau de bord une batterie de plus forte puissance, mais cela engendre des coûts élevés.

### EXPOSE DE L'INVENTION

L'invention vise à remédier à tout ou partie des inconvénients identifiés ci-dessus, et notamment à proposer un réseau électrique pour véhicule automobile à moindre coût qui est protégé contre les chutes de tension lors de l'activation de composants de forte puissance sans dégrader les performances du stockeur d'énergie du réseau, ni sa durée de vie.

Dans ce dessein, un aspect de l'invention se rapporte à un réseau électrique pour véhicule automobile comportant :
- un premier sous-réseau électrique, ledit premier sous-réseau électrique comportant en parallèle :
   - un générateur électrique ;
   - un premier stockeur d'énergie ;
   - au moins un premier consommateur électrique ;
- un deuxième sous-réseau électrique, ledit deuxième sous-réseau électrique comportant en parallèle :
   - un second stockeur d'énergie ;
   - un second consommateur électrique ;
   - un convertisseur continu-continu, configuré pour charger le second stockeur d'énergie à partir du premier sous-réseau ;
le réseau électrique comprenant en outre un moyen de commutation entre le premier sous-réseau et le second sous-réseau, ledit moyen de commutation étant configuré pour relier électriquement le premier sous-réseau et le second sous-réseau lorsque la tension aux bornes du second stockeur d'énergie devient égale à la tension aux bornes du premier stockeur d'énergie, de façon à assurer une alimentation du second consommateur par le générateur électrique.

Le réseau comprend donc un premier sous-réseau électrique, destiné au premier consommateur électrique d'énergie du véhicule, aussi appelé charge électrique du véhicule, nécessitant une tension stabilisée et alimenté par le stockeur d'énergie ou par le générateur électrique. Le réseau comprend en outre un deuxième sous-réseau électrique destiné au second consommateur. Le second consommateur est en particulier un composant provoquant des chutes de tension, par exemple un composant de forte puissance s'activant de manière transitoire. Le premier sous-réseau est isolé du deuxième sous-réseau par le convertisseur continu-continu du réseau électrique. Le stockeur d'énergie du deuxième sous-réseau est chargé par le générateur électrique ou le stockeur d'énergie du premier sous-réseau par l'intermédiaire du convertisseur continu-continu. Le second stockeur d'énergie peut ainsi fournir au second composant une tension suffisante lors de l'activation de celui-ci. En particulier, le convertisseur continu-continu amplifie la tension qu'il voit en entrée, i.e. celle du premier sous-réseau électrique. Dans le cas d'un véhicule standard, la tension du premier sous-réseau électrique est aux alentours de 12 V. Le second stockeur d'énergie est dimensionné en fonction du second composant disposé dans le deuxième sous-réseau électrique. Le premier sous-réseau étant isolé du deuxième sous-réseau par le convertisseur DC-DC, il n'est pas affecté par les chutes de tension qui apparaissent lors de l'activation du second composant.

En particulier, le premier stockeur d'énergie est configuré pour alimenter le premier consommateur électrique. En particulier, le second stockeur d'énergie est configuré pour alimenter le second consommateur électrique.

Par exemple, le premier sous-réseau électrique est relié à l'entrée du convertisseur continu-continu et le deuxième sous-réseau électrique est relié à la sortie du convertisseur continu-continu.

En particulier, le moyen de commutation relie l'entrée du convertisseur continu-continu à la sortie du convertisseur continu-continu. Le moyen de commutation permet de faire basculer l'alimentation du second composant sur le premier sous-réseau, et donc sur le générateur électrique, dans le cas où l'activation du second composant est longue et où le second stockeur d'énergie se décharge trop rapidement i.e. lorsque l'énergie nécessaire à l'activation du second composant est plus élevée que l'énergie utilisable dans le second stockeur d'énergie. Ainsi, le générateur électrique peut prendre le relais et assurer la fourniture de puissance pendant le reste de la phase d'activation du second composant. Le basculement de l'alimentation du second composant sur le premier sous-réseau se fait en fermant le moyen de commutation. La fermeture dudit moyen de commutation peut se faire par des moyens de contrôle qui sont par exemple commandés par un capteur de la tension aux bornes du stockeur d'énergie du second sous-réseau.

Outre les caractéristiques qui viennent d'être mentionnées dans le paragraphe précédent, le réseau électrique selon l'invention peut présenter une ou plusieurs caractéristiques complémentaires parmi les suivantes, considérées individuellement ou selon les combinaisons techniquement possibles avec le réseau défini dans la revendication indépendante 1:
- le second stockeur d'énergie a une capacité de stockage supérieure à celle du premier stockeur d'énergie et le second consommateur électrique a une puissance électrique supérieure à celle du premier consommateur électrique ;
- en particulier, le second composant est un composant de forte puissance, notamment un compresseur de suralimentation électrique;
- le second stockeur d'énergie est un stockeur de puissance, en particulier un super-condensateur. Un super-condensateur est un stockeur de puissance particulièrement bien adapté pour la fourniture de fortes puissances pendant un laps de temps limité. En outre, un super-condensateur a pour avantage de pouvoir subir un nombre de cycle de charge/décharge illimité, contrairement à un stockeur d'énergie présent sur un réseau électrique de véhicule automobile du type batterie. En particulier, le nombre de condensateurs et leurs caractéristiques sont dimensionnés en fonction de la puissance nécessaire à l'activation du composant du deuxième sous-réseau électrique. La charge d'un super-condensateur a également pour avantage d'être rapide, ce qui permet d'enchainer en un laps de temps limité les phases d'activation du second composant, notamment quand il s'agit d'un composant de forte puissance. Le temps de charge peut dépendre de la capacité du super-condensateur, du courant de recharge et de la différence de tension Vmax-Vmin. Par exemple, pour un courant de 300 A, il faut environ 20 s pour charger une cellule de 2000 F de 0 à 2,7 V (2,7 V étant la tension maximale de la cellule) ;
- le deuxième sous-réseau électrique comporte une branche électrique en parallèle comprenant un troisième consommateur électrique. Le second sous-réseau électrique peut être destiné à une pluralité de consommateurs d'un réseau électrique de véhicule automobile provoquant des chutes de tension lors de leur activation et pouvant perturber le premier sous-réseau électrique ;
- le deuxième sous-réseau électrique comporte un second moyen de commutation configuré pour sélectivement isoler et connecter la branche parallèle avec le second stockeur d'énergie et le second consommateur électrique ;
- le premier moyen de commutation est relié au second sous réseau par l'intermédiaire d'une borne de ladite branche parallèle ;
- le troisième composant est un démarreur. La disposition d'un démarreur en parallèle dans le deuxième sous-réseau électrique permet d'éviter, lors du démarrage du véhicule, l'apparition de chutes de tension sur le réseau de bord, notamment le premier sous-réseau. Dans ce cas, le super-condensateur est de préférence dimensionné afin de pouvoir compenser la chute de tension à l'activation du composant de forte puissance ayant la chute de tension la plus élevée au démarrage ;

- le convertisseur continu-continu est un convertisseur élévateur-abaisseur (« buck-boost » en anglais). Un convertisseur DC-DC de type buck/boost permet, à partir de la tension en entrée dudit convertisseur, i.e. la tension du premier sous-réseau, de charger le second stockeur d'énergie en deux temps :
   - dans un premier temps, lorsque la tension aux bornes du second stockeur d'énergie est nulle ou inférieure à celle du premier sous-réseau, le convertisseur DC/DC est commandé par des moyens de commande pour jouer un rôle d'abaisseur de tension (buck) afin que la tension de sortie soit comprise entre 0 et la tension du premier sous-réseau;
   - dans un second temps, lorsque la tension aux bornes du stockeur de puissance est égale à la tension du premier sous-réseau électrique, le convertisseur DC/DC est commandé par des moyens de commande pour jouer un rôle d'élévateur de tension (boost) afin que la tension de sortie soit comprise entre la tension du premier sous-réseau et une tension maximale prédéterminée. Cette tension maximale est déterminée afin d'assurer l'activation du second composant ; et
- le générateur électrique est un alternateur relié en parallèle à un convertisseur alternatif-continu.

L'invention concerne un réseau électrique pour véhicule automobile comportant :
- un premier sous-réseau électrique, ledit premier sous-réseau électrique comportant en parallèle :
   - un générateur électrique ;
   - un premier stockeur d'énergie ;
   - au moins un premier consommateur électrique ;
- un deuxième sous-réseau (3) électrique, ledit deuxième sous-réseau électrique comportant en parallèle :
   - un second stockeur d'énergie ;
   - un second consommateur électrique ;
   - un troisième consommateur électrique ;
- un convertisseur continu-continu, configuré pour charger le second stockeur d'énergie à partir du premier sous- réseau ;

le réseau électrique comprenant en outre :
- un moyen de commutation entre le premier sous-réseau et le second sous-réseau, ledit moyen de commutation étant configuré pour relier électriquement le premier sous-réseau et le second sous-réseau lorsque la tension aux bornes du second stockeur d'énergie devient égale à la tension aux bornes du premier stockeur d'énergie, de façon à assurer une alimentation du second consommateur par le générateur électrique ;
- un second moyen de commutation configuré pour sélectivement isoler et connecter le troisième consommateur électrique avec le second stockeur d'énergie et le second consommateur électrique ;
le troisième consommateur électrique ayant une même borne commune avec le premier moyen de commutation et le second moyen de commutation.

Autrement dit, selon l'invention, le troisième composant a une borne commune avec le premier interrupteur. Cette même borne du troisième composant est aussi commune avec le second interrupteur. En particulier, le troisième composant a une borne reliée à la masse du réseau, et une autre borne reliée d'une part à une borne du premier moyen de commutation et d'autre part à une borne du second moyen de commutation.

Ainsi, selon l'invention, la branche électrique comprenant le troisième consommateur électrique est située entre le premier moyen de commutation et le second moyen de commutation. Le troisième consommateur peut donc être alimenté par le premier sous-réseau et/ou par le second sous-réseau, indépendamment des autres consommateurs électriques.

Le réseau selon cet aspect de l'invention peut comprendre une ou plusieurs des caractéristiques décrites auparavant qui lui sont compatibles.

Dans une variante, le convertisseur continu-continu peut être un convertisseur réversible. Autrement dit, le convertisseur peut non seulement permettre une transmission d'un signal électrique du premier sous-réseau au deuxième sous-réseau, mais aussi une transmission d'un signal électrique du deuxième sous-réseau 3 au premier sous-réseau. Ainsi, le second stockeur peut avantageusement alimenter le premier sous-réseau lorsque le second stockeur présente une charge suffisante.

Par exemple, le stockeur de puissance peut être chargé lors d'une phase de freinage récupératif. Le générateur électrique produit alors une énergie électrique à partir d'un freinage mécanique du véhicule. La totalité ou une portion de cette énergie est transmise au second stockeur. Par la suite, l'énergie stockée dans le second stockeur d'énergie peut être utilisée pour alimenter le second consommateur et/ou pour alimenter le premier sous-réseau par l'intermédiaire du convertisseur continu-continu réversible.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma d'un réseau électrique ;
- la figure 2, un schéma d'un réseau électrique ;
- la figure 3, un schéma d'un réseau électrique selon l'invention.

Pour plus de clarté, les éléments identiques ou similaires sont repérés par des signes de référence identiques sur l'ensemble des figures.

### DESCRIPTION DETAILLEE D'UN MODE DE REALISATION

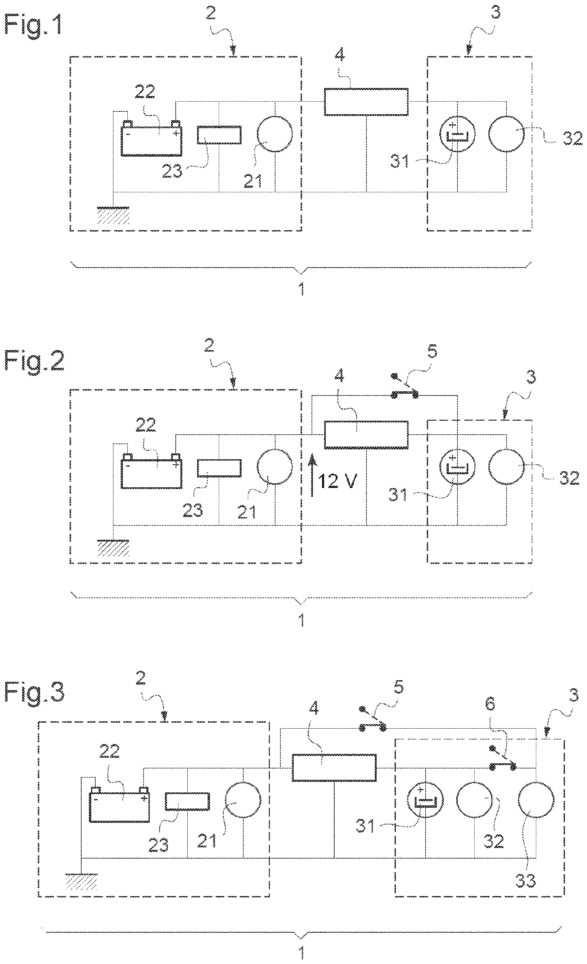

A la figure 1 est représenté un schéma d'un réseau électrique 1 pour véhicule automobile. Ce réseau électrique 1 comprend un premier sous-réseau électrique 2 comprenant un stockeur d'énergie, ici une batterie 22, reliée en parallèle à un générateur électrique 21 et à un consommateur électrique 23. Le consommateur électrique 23 est un dispositif consommateur du véhicule, par exemple du type dispositif pour la ventilation ou l'éclairage. Il peut y avoir plusieurs consommateurs électriques sur le premier sous-réseau électrique 2. Ce consommateur électrique nécessite une tension stabilisée et ne tombant pas en-dessous d'un seuil de fonctionnement. A noter que pour certains consommateurs, une tension inférieure au seuil de fonctionnement pendant une durée très courte est supportable. Par exemple, une chute de tension pendant quelques microsecondes ne serait pas visible, même sur un système d'éclairage. Le réseau électrique 1 comprend un deuxième sous-réseau électrique 3 comportant un stockeur de puissance, ici un super-condensateur 31, relié en parallèle à un composant de forte puissance s'activant de manière transitoire, ici un compresseur de suralimentation électrique 32. Le stockeur de puissance 31 est, dans ce mode de réalisation, un super-condensateur mais aurait pu être également du type stockeur lithium. Le réseau électrique 1 comprend un convertisseur continu-continu 4. Le premier sous-réseau électrique 2 est relié à l'entrée du convertisseur continu-continu 4 et le deuxième sous-réseau électrique 3 est relié à la sortie du convertisseur continu-continu 4. Le premier sous-réseau électrique 2 illustré est un réseau de bord d'un véhicule fonctionnant sous une tension de 12V environ. Lors de sa phase transitoire d'activation, le compresseur de suralimentation électrique 32 a de forts appels de courants qui n'ont pas de conséquence sur le consommateur électrique 23 du premier sous-réseau électrique 2. En effet, le compresseur 32 est isolé du premier sous-réseau électrique 2 par le convertisseur continu-continu 4 et l'appel de courant lors de l'activation du compresseur de suralimentation électrique 32 n'entrainera pas de chute de la tension sur le premier sous-réseau 2. Cette chute de tension est visible seulement par le stockeur de puissance 31 du deuxième sous-réseau 3 électrique. La durée de vie de la batterie 22 n'est donc pas impactée par ces appels de courant.

La batterie 22 est chargée de façon connue en soi par le générateur électrique 21. Une fois la batterie 22 chargée par le générateur électrique, des moyens de contrôle peuvent assurer que le générateur électrique 21 n'alimente que le consommateur électrique 23. Lesdits moyens de contrôle peuvent être reliés à un moyen de mesure du courant de la batterie 22 (non visible sur les figures) qui peut être disposé sur une des bornes positive ou négative de la batterie 22 et qui permet de détecter l'état de charge de la batterie 22. Une fois que la batterie 22 est dans son état optimal, le générateur 21 alimente seulement le consommateur électrique 23 du véhicule au moyen d'une régulation de tension du type « zéro courant de batterie » permettant d'obtenir un courant nul global au niveau de la batterie 22.

Le convertisseur continu-continu 4 prend de l'énergie dans le premier sous-réseau 2 pour charger le super-condensateur 31. Dans le mode de réalisation de la figure 1, le convertisseur 4 continu- continu est un convertisseur abaisseur/élévateur (buck/boost) de tension. Ainsi la tension de sortie du convertisseur 4 peut être :
- comprise entre 0 et la valeur de la tension aux bornes du premier sous-réseau 2 électrique pendant une phase où le convertisseur 4 joue le rôle d'abaisseur de tension, sa tension d'entrée étant la tension aux bornes du premier sous-réseau 2 électrique ;
- comprise entre la valeur de la tension aux bornes du premier sous-réseau 2 électrique et une valeur maximale prédéterminée permettant d'assurer une alimentation en puissance du compresseur 32 suffisante pendant la phase d'activation dudit compresseur. Durant cette phase, le convertisseur 4 joue le rôle d'élévateur de tension sa tension d'entrée étant la tension aux bornes du premier sous-réseau 2 électrique.

Ainsi, la tension aux bornes du super-condensateur 31 varie entre, dans un premier temps une tension nulle et la tension aux bornes de la batterie 22 puis entre la tension aux bornes de la batterie 22 et la tension maximale que peut supporter le super-condensateur 31. Cette tension maximale que peut supporter le super-condensateur 31 dépend du temps de réponse demandé au compresseur de suralimentation électrique 32, ce temps de réponse dimensionnant l'intensité et la durée de l'appel de courant lors de l'activation.

Lors de l'activation du compresseur 32, des moyens de commande permettent au super-condensateur 31 d'alimenter le compresseur 32 avec une tension suffisante. Le super-condensateur 31 se décharge dans le compresseur 32. Ainsi seul le second sous-réseau électrique 3 est perturbé par l'activation du composant de forte puissance 32. Le super-condensateur 31, une fois déchargé, est rechargé par l'intermédiaire du convertisseur continu-continu 4 afin de pouvoir répondre à une nouvelle sollicitation du compresseur 32 de suralimentation électrique.

La figure 2 illustre schématiquement un autre réseau électrique 1 pour véhicule automobile. Le réseau électrique 1 de la figure 2 diffère de celui illustré à la figure 1 par l'ajout d'un moyen de commutation 5 entre l'entrée du convertisseur 4 continu-continu et la sortie du convertisseur 4 continu-continu. Le moyen de commutation 5 utilisé peut être, par exemple, un relai mécanique dimensionné en fonction du courant maximal et du nombre d'activations envisagées.

Des moyens de contrôle font notamment basculer le moyen de commutation entre un état passant et un état bloqué. Dans son état bloqué, le fonctionnement du circuit électrique est identique à celui décrit précédemment en référence à la figure 1. Le basculement dans l'état passant peut être fait par les moyens de contrôle lorsque la tension aux bornes du super-condensateur 31 n'est plus suffisante pour alimenter le compresseur 32 et que la phase d'activation n'est pas encore terminée. En particulier, la tension aux bornes du super-condensateur 31 n'est plus suffisante lorsque la tension aux bornes du super-condensateur 31 n'est plus supérieure à la tension aux bornes du premier sous-réseau 2, en particulier aux bornes du premier stockeur 22. Ce cas de figure correspond par exemple au cas où le super-condensateur 31 n'a pas stocké suffisamment de puissance pendant sa charge pour faire face aux besoins du compresseur 32. Le composant de forte puissance 32, ici un compresseur de suralimentation électrique 32, peut alors être alimenté en puissance par le générateur électrique 21 du premier sous-réseau. Autrement dit, la puissance demandée par le composant de forte puissance 32 pendant son activation peut être fournie en cas de besoin par le générateur électrique 21.

Cette insuffisance de puissance du stockeur 31 du second sous-réseau peut être le résultat d'une durée trop longue de la phase transitoire d'activation du compresseur 32 ou d'une charge insuffisante du super-condensateur 31. Dans ces cas, le moyen de commutation 5 bascule en état passant et court-circuite le convertisseur continu-continu 4. Le compresseur 32 est alimenté par le générateur 21 électrique du premier sous-réseau 2 ou éventuellement par la batterie 22.

A noter que lorsque le fonctionnement du compresseur 32 se prolonge, il est alors à un régime stabilisé, par exemple à 70000 RPM. La puissance requise par le compresseur 32 est alors inférieure à celle nécessaire lors de son activation. Lorsque le moyen de commutation 5 devient passant le compresseur 32 n'occasionne donc pas de chute de tension sur le premier sous-réseau 2.

La figure 3 illustre schématiquement un réseau électrique 1 pour véhicule automobile selon l'invention. Le réseau électrique 1 de la figure 3 diffère de celui illustré à la figure 2 par l'ajout d'un démarreur 33 branché en parallèle sur le deuxième sous-réseau 3 et d'un interrupteur 6 entre une borne du démarreur 33 et les autres éléments 31, 32 du deuxième sous-réseau 3. Le premier interrupteur 5 est relié au deuxième sous-réseau 3 par l'intermédiaire de cette même borne du démarreur 33. Ce mode de réalisation décrit le branchement d'un démarreur 33 en parallèle sur le deuxième sous-réseau électrique, mais il s'applique à tout composant de forte puissance s'activant de manière transitoire dont l'activation pourrait perturber le fonctionnement des consommateurs d'énergie 23 du premier sous-réseau électrique 2 du véhicule.

Le second interrupteur 6 permet de varier les modes de fonctionnement du deuxième sous-réseau 3. Le compresseur 32 et le démarreur 33 peuvent être isolés du premier sous-réseau 2 (le premier interrupteur 5 est ouvert) et alimentés par le super-condensateur 31 (le second interrupteur 6 est fermé). Ainsi au démarrage du véhicule, le démarreur 33 dont l'activation pourrait perturber le fonctionnement du consommateur électrique 23 du fait de l'appel de courant créé, est isolé du premier sous-réseau 2 et le super-condensateur 31 assure son alimentation. Le compresseur 32 et le démarreur 33 peuvent être tous les deux alimentés par le premier sous-réseau 2 (les premier et second interrupteurs 5, 6 sont fermés). Alternativement, le compresseur 32 est alimenté par le super-condensateur 31 alors que le démarreur 33 est alimenté par le premier sous-réseau 2 (premier interrupteur 5 fermé et second interrupteur 6 ouvert).

Bien entendu, l'invention n'est pas limitée aux exemples décrits. En particulier, le compresseur 32 et le démarreur 33 peuvent être d'autres composants de forte puissance.

## Revendications

1. Réseau électrique (1) pour véhicule automobile comportant :
- un premier sous-réseau (2) électrique, ledit premier sous-réseau électrique (2) comportant en parallèle :
- un générateur électrique (21) ;
- un premier stockeur d'énergie (22) ;
- au moins un premier consommateur électrique (23) ;
- un deuxième sous-réseau (3) électrique, ledit deuxième sous-réseau (3) électrique comportant en parallèle :
- un second stockeur d'énergie (31) ;
- un second consommateur électrique (32) ;
- un troisième consommateur électrique (33) ;
- un convertisseur continu-continu (4), configuré pour charger le second stockeur d'énergie (31) à partir du premier sous- réseau ;
le réseau électrique (1) comprenant en outre :
- un moyen de commutation (5) entre le premier sous-réseau (2) et le second sous-réseau (3), ledit moyen de commutation (5) étant configuré pour relier électriquement le premier sous-réseau (2) et le second sous-réseau (3) lorsque la tension aux bornes du second stockeur d'énergie (31) devient égale à la tension aux bornes du premier stockeur d'énergie (22), de façon à assurer une alimentation du second consommateur (32) par le générateur électrique (21)
- un second moyen de commutation (6) configuré pour sélectivement isoler et connecter le troisième consommateur électrique (33) avec le second stockeur d'énergie (31) et le second consommateur électrique (32) ;
le troisième consommateur électrique (33) ayant une même borne commune avec le premier moyen de commutation (5) et le second moyen de commutation (6).

2. Réseau électrique (1) selon la revendication 1, dans lequel le second stockeur d'énergie (31) a une capacité de stockage supérieure à celle du premier stockeur d'énergie (22) et le second consommateur électrique (32) a une puissance électrique nominale supérieure à celle du premier consommateur électrique (23).

3. Réseau électrique (1) selon les revendications 1 ou 2, dans lequel le troisième composant (33) est un démarreur.

4. Réseau électrique (1) selon l'une des revendications précédentes, dans lequel le second stockeur d'énergie (31) est un super-condensateur.

5. Réseau électrique (1) selon l'une des revendications précédentes, dans lequel le second consommateur (32) est un compresseur de suralimentation électrique.

6. Réseau électrique (1) selon l'une des revendications précédentes, dans lequel le convertisseur continu-continu (4) est un convertisseur élévateur-abaisseur.

7. Réseau électrique (1) selon l'une des revendications précédentes, dans lequel le convertisseur continu-continu (4) est un convertisseur réversible.

8. Réseau électrique (1) selon l'une des revendications précédentes, dans lequel le générateur électrique (21) est un alternateur relié en parallèle à un convertisseur alternatif-continu.

## Patentansprüche

1. Elektrisches Netzwerk (1) für ein Kraftfahrzeug, das aufweist:
- ein erstes elektrisches Teilnetz (2), wobei das erste elektrische Teilnetz (2) parallel aufweist:
- einen elektrischen Generator (21);
- einen ersten Energiespeicher (22);
- mindestens einen ersten elektrischen Verbraucher (23) ;
- ein zweites elektrisches Teilnetz (3), wobei das zweite elektrische Teilnetz (3) parallel aufweist:
- einen zweiten Energiespeicher (31);
- einen zweiten elektrischen Verbraucher (32);
- einen dritten elektrischen Verbraucher (33);
- einen Gleichstrom-Gleichstrom-Wandler (4), der konfiguriert ist, den zweiten Energiespeicher (31) ausgehend vom ersten Teilnetz zu laden;
wobei das elektrische Netzwerk (1) außerdem enthält:
- eine Umschalteinrichtung (5) zwischen dem ersten Teilnetz (2) und dem zweiten Teilnetz (3), wobei die Umschalteinrichtung (5) konfiguriert ist, das erste Teilnetz (2) und das zweite Teilnetz (3) elektrisch zu verbinden, wenn die Spannung an den Klemmen des zweiten Energiespeichers (31) gleich der Spannung an den Klemmen des ersten Energiespeichers (22) wird, um eine Versorgung des zweiten Verbrauchers (32) durch den elektrischen Generator (21) zu gewährleisten;
- eine zweite Umschalteinrichtung (6), die konfiguriert ist, den dritten elektrischen Verbraucher (33) selektiv zu isolieren und mit dem zweiten Energiespeicher (31) und dem zweiten elektrischen Verbraucher (32) zu verbinden;
wobei der dritte elektrische Verbraucher (33) eine gleiche gemeinsame Klemme mit der ersten Umschalteinrichtung (5) und der zweiten Umschalteinrichtung (6) hat.

2. Elektrisches Netzwerk (1) nach Anspruch 1, wobei der zweite Energiespeicher (31) eine Speicherkapazität größer als diejenige des ersten Energiespeichers (22) hat, und der zweite elektrische Verbraucher (32) eine elektrische Nennleistung größer als diejenige des ersten elektrischen Verbrauchers (23) hat.

3. Elektrisches Netzwerk (1) nach den Ansprüchen 1 oder 2, wobei das dritte Bauteil (33) ein Starter ist.

4. Elektrisches Netzwerk (1) nach einem der vorhergehenden Ansprüche, wobei der zweite Energiespeicher (31) ein Superkondensator ist.

5. Elektrisches Netzwerk (1) nach einem der vorhergehenden Ansprüche, wobei der zweite Verbraucher (32) ein elektrischer Auflader ist.

6. Elektrisches Netzwerk (1) nach einem der vorhergehenden Ansprüche, wobei der Gleichstrom-Gleichstrom-Wandler (4) ein Aufwärts-Abwärts-Wandler ist.

7. Elektrisches Netzwerk (1) nach einem der vorhergehenden Ansprüche, wobei der Gleichstrom-Gleichstrom-Wandler (4) ein reversibler Wandler ist.

8. Elektrisches Netzwerk (1) nach einem der vorhergehenden Ansprüche, wobei der elektrische Generator (21) ein mit einem Wechselstrom-Gleichstrom-Wandler parallel geschalteter Wechselstromgenerator ist.

## Claims

1. Electrical network (1) for an automotive vehicle comprising
- a first electrical subnetwork (2), the said first electrical subnetwork (2) comprising in parallel:
- an electrical generator (21);
- a first energy store (22);
- at least one first electrical consumer (23);
- a second electrical subnetwork (3), the said second electrical subnetwork (3) comprising in parallel:
- a second energy store (31);
- a second electrical consumer (32);
- a third electrical consumer (33);
- a DC/DC converter (4), configured to charge the second energy store (31) from the first subnetwork;
the electrical network (1) also comprising:
- a means to switch (5) between the first subnetwork (2) and the second subnetwork (3), the said switching means (5) being configured to electrically connect the first subnetwork (2) and the second subnetwork (3) when the voltage across the terminals of the second energy store (31) becomes equal to the voltage across the terminals of the first energy store (22), so as to ensure a supply to the second consumer (32) by the electrical generator (21);
- a second switching means (6) configured to selectively isolate and connect the third electrical consumer (33) with the second energy store (31) and the second electrical consumer (32);
the third electrical consumer (33) having one terminal in common with the first switching means (5) and the second switching means (6).

2. Electrical network (1) according to claim 1, wherein the second energy store (31) has a greater storage capacity than that of the first energy store (22) and the second electrical consumer (32) has a greater electrical power than that of the first electrical consumer (23).

3. Electrical network (1) according to claims 1 or 2, wherein the third component (33) is a starter.

4. Electrical network (1) according to one of the preceding claims, wherein the second energy store (31) is a super-condenser.

5. Electrical network (1) according to one of the preceding claims, wherein the second consumer (32) is an electrical supercharger.

6. Electrical network (1) according to one of the preceding claims, wherein the DC/DC converter (4) is a step-up/step-down converter.

7. Electrical network (1) according to one of the preceding claims, wherein the DC/DC converter (4) is a reversible converter.

8. Electrical network (1) according to one of the preceding claims, wherein the electrical generator (21) is an alternator connected in parallel to an AC/DC converter.
